(19) Europäisches Patentamt
European Patent Office
Office européen des brevets

(11) Veröffentlichungsnummer: **0 018 670**
**B1**

(12) # EUROPÄISCHE PATENTSCHRIFT

(45) Veröffentlichungstag der Patentschrift: **20.10.82**

(51) Int. Cl.³: **C 01 B 11/02**

(21) Anmeldenummer: **80200274.1**

(22) Anmeldetag: **25.03.80**

(54) **Verfahren zur Herstellung von Chlordioxid.**

(30) Priorität: **27.04.79 DE 2917132**

(43) Veröffentlichungstag der Anmeldung: **12.11.80 Patentblatt 80/23**

(45) Bekanntmachung des Hinweises auf die Patenterteilung: **20.10.82 Patentblatt 82/42**

(84) Benannte Vertragsstaaten: **AT BE CH DE FR GB IT NL SE**

(56) Entgegenhaltungen:
**FR-A-2 345 392**
**FR-A-2 393 761**
**US-A-3 502 443**
**US-A-3 516 790**
**US-A-3 524 728**
**US-A-3 594 580**
**US-A-3 607 027**
**US-A-3 933 988**
**US-A-3 950 500**
**CHEMICAL ABSTRACTS, Band 79, Nr. 4, 30. Juli 1973, Zusammenfassung Nr. 21123p, Seite 152, Spalte 2 COLUMBUS OHIO (US)**

(73) Patentinhaber: **METALLGESELLSCHAFT AG, Reuterweg 14 Postfach 3724, D-6000 Frankfurt/M.1 (DE)**

(72) Erfinder: **Bielz, Siegfried, Wilhelm-Busch-Strasse 62, D-6000 Frankfurt am Main (DE)**
Erfinder: **Janisch, Paul, Dipl.-Chem., Auf der Mauseller, D-6497 Steinau 2 (DE)**
Erfinder: **Lohrberg, Karl, Dipl.-Ing., Breslauer Strasse 1, D-6056 Heusenstamm (DE)**

(74) Vertreter: **Fischer, Ernst, Dr., Reuterweg 14, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von Chlordioxid

Die Erfindung betrifft ein kontinuierliches Verfahren zur Herstellung von Chlordioxid.

Wegen seines instabilen Charakters kann Chlordioxid nicht in grösserem Umfang produziert und bis zum Gebrauch aufbewahrt werden. Daher muss Chlordioxidgas am Verbrauchsort selbst und nur in unmittelbar benötigten Mengen und in genau geregelten Konzentrationen hergestellt werden. Diese Anforderungen verursachten bisher beträchtliche Schwierigkeiten, weil die unmittelbar benötigten Mengen an Chlordioxid üblicherweise über einen beträchtlichen Bereich variieren und häufig die Anpassungsfähigkeit der bisher verfügbaren Chlordioxiderzeuger überschreiten, wodurch die Unterhaltung und periodische Einschaltung einer grösseren Zahl Chlordioxidgeneratoren erforderlich war. Eine weitere Schwierigkeit lag in dem Erfordernis, das Chlordioxid durch die ganze Herstellungseinrichtung hindurch in ungefährlichen Konzentrationen zu halten.

Es ist bekannt, bei der Erzeugung von Chlordioxid nach dem sogenannten «Münchner Verfahren» die durch Elektrolyse von Alkalichlorid erzeugte Chloratlösung mit Salzsäure zu Chlordioxid und Chlor umzusetzen, wobei die verbrauchte Chloratlösung rezirkuliert wird. Das als Nebenprodukt bei der Chlordioxiderzeugung anfallende Chlor wird nach dem vorbekannten Verfahren mit dem in der Chloratelektrolyse anfallenden Wasserstoff zu Salzsäure verbrannt. Der Chlordioxid-Reaktor muss mit Luft beaufschlagt werden, um das erzeugte Chlordioxid unterhalb einer Konzentration von 15% im Gas zu halten, damit Explosionen durch Selbstzersetzung des Chlordioxids sicher vermieden werden (DE-C-831 542, 924 689; «Ullmann», 3. Aufl. 1954, Bd. 5, S. 553).

Der Wirkungsgrad des Verfahrens hängt von den folgenden Reaktionen ab:

(1) $2\,NaClO_3 + 4\,HCl \rightarrow 2\,ClO_2 + Cl_2 + 2\,NaCl + 2\,H_2O$

(2) $NaClO_3 + 6\,HCl \rightarrow 3\,Cl_2 + NaCl + 3H_2O$

Normalerweise überwiegt die Reaktion nach Gleichung (1). Reaktion nach Gleichung (2) nimmt mit steigender Chloridkonzentration zu. Gleichung (2) ist, da nach ihr kein Chlordioxid produziert wird, grundsätzlich unerwünscht, lässt sich jedoch nicht ganz unterdrücken. Der Wirkungsgrad des Chlordioxid-Reaktors wäre 100%, wenn Gleichung (2) an der Reaktion nicht teilnehmen würde. Da dieses aber nicht der Fall ist, ergeben sich folgende Abhängigkeiten und Materialbilanzen:

| Wirkungsgrad in % | | 88 | 92 | 96 |
|---|---|---|---|---|
| verbrauchtes | $NaClO_3/t\,ClO_2$ | 1,8 | 1,72 | 1,64 |
| verbrauchter | $HCl/t\,ClO_2$ | 1,52 | 1,36 | 1,22 |
| erzeugtes | $Cl_2/t\,ClO_2$ | 0,96 | 0,80 | 0,66 |
| erzeugter | $H_2/t\,ClO_2$ | 0,102 | 0,097 | 0,093 |
| benötigter | $H_2/t\,ClO_2$ | 0,102 | 0,099 | 0,097 |

Aus diesen Werten geht hervor, dass eine an sich wünschenswerte Steigerung des Wirkungsgrades der Chlordioxiderzeugung nach dem bekannten Verfahren über 88% hinaus nicht möglich ist, weil dann der Wasserstoff zur Verbrennung des als Nebenprodukt erzeugten Chlors einschliesslich des Sauerstoffs aus der als Trägergas verwendeten Luft nicht mehr ausreicht.

Darüber hinaus benötigt das vorbekannte Münchner Verfahren als Rohmaterial eine dem Chlordioxid entsprechend stöchiometrische Menge Salzsäure. Falls diese Salzsäure beispielsweise durch Verbrennen von verdampftem Chlor mit Wasserstoff erzeugt werden soll, reicht die bei der Chloratelektrolyse anfallende Wasserstoffmenge in keinem Falle aus.

Das Ersetzen der Luft als Trägergas durch Stickstoff oder andere inerte Gase ist nicht möglich, weil der Wasserstoff zur Verbrennung eine Mindestmenge Chlor und Sauerstoff gebraucht. Diese Konzentrationen liegen beispielsweise bei 15% Chlor plus 10% Sauerstoff oder bei beispielsweise 32% Chlor. Hier ist dem vorbekannten Verfahren also eine weitere Grenze gesetzt.

Der Erfindung liegt die Aufgabe zugrunde, die Beschränkungen und Nachteile des vorbekannten Verfahrens zu vermeiden und den Wirkungsgrad zu verbessern sowie die Betriebssicherheit zu erhöhen.

Die Erfindung löst die Aufgabe mit einem Verfahren zur kontinuierlichen Herstellung von Chlordioxid durch Umsetzen von Alkalichlorat mit Salzsäure in einem Reaktor, wobei ein Luftstrom entgegen dem Flüssigkeitsstrom geleitet wird.

Bei einem Verfahren der genannten Art besteht die Erfindung darin, dass der in den Reaktor eingeführte Luftstrom teilweise durch einen Chlorgasstrom ersetzt wird. Dabei wird die eingeführte Chlorgasmenge zweckmässig so bemessen, dass sie derjenigen und in Form von Chlordioxid aus dem Reaktor ausgetragenen Chlormenge entspricht.

Mit der erfindungsgemässen Massnahme des teilweisen Ersatzes des Luftstroms durch einen Chlorgasstrom wird die zur Verdünnung des Chlordioxids eingebrachte Sauerstoffmenge verringert, ohne dass die Konzentration an $ClO_2$ im Gas erhöht wird. Die Menge Sauerstoff wird so niedrig bemessen, dass zusätzlich zu dem bei der Chlordioxiderzeugung als Nebenprodukt anfallenden Chlor auch noch die zur Deckung des gesamten Chlorwasserstoffbedarfs der Reaktion zu ergänzende Chlormenge mit dem Wasserstoff aus der Chloratelektrolyse verbrannt werden kann. Es ist ferner zweckmässig, die Sauerstoffmenge so weit zu senken, dass für die Verbrennung des Chlors ein Wasserstoffüberschuss verbleibt.

Der in den Reaktor eingeführte und den Luftstrom teilweise ersetzende Chlorgasstrom wird im allgemeinen als Fremdstrom und nicht dem Verfahren entstammender Chlorgasstrom eingeführt. Im Sinne der Erfindung wird daher unter Fremdstrom ein Chlorgasstrom verstanden, der beispielsweise einer Chloralkalielektrolyse, wie Membranelektrolyse, oder einem Druckgefäss mit verflüssigtem Chlorgas entstammt. Nach einer weiteren Ausführungsform der Erfindung kann aber auch das in dem Verfahren als Nebenprodukt der Chloratzersetzung entstehende Chlorgas, nach Auswaschung des Chlordioxids aus dem Trägergas, in den Reaktor rückgeführt werden.

Mit dem erfindungsgemässen Verfahren ergeben sich eine Reihe von Vorteilen bei der kontinuierlichen Herstellung von Chlordioxid durch Zersetzung von Alkalichloraten mit Salzsäure.

Der Chlordioxidgehalt im Reaktorgas kann beliebig kleiner als 15% und damit weit unterhalb der Explosionsgrenze eingestellt werden.

Der Chlordioxid-Reaktor wird in seinem Wirkungsgrad erheblich gesteigert, was die Wirtschaftlichkeit wesentlich verbessert.

Bei der Rezirkulation wird Luft durch Chlor ersetzt, d.h. die Verbrennung läuft wesentlich sicherer, weil für 21 Vol.-% Sauerstoff in der Luft 100 Vol.-% Chlor im zu verbrennenden Gas enthalten sind.

Die Verbrennung von Chlor und Wasserstoff zu Salzsäure wird mit Wasserstoffüberschuss betrieben.

Aufgrund der kleineren zur Verbrennung gelangenden Gasmenge werden Salzsäure-Ofen und Salzsäure-Absorber als kleinere Baueinheiten ausgestaltet.

Die Erfindung wird anhand des Fliessschemas und Ausführungsbeispiels beispielhaft und näher erläutert.

In den Chlordioxid-Reaktor bzw. Chloratzersetzer wird über Leitung 7 aus der Chloratelektrolysezelle 1 Alkalichlorat eingespeist und über Leitung 10 ein Luftstrom eingeführt. In den Reaktor 2 wird ferner Chlorwasserstoff als wässrige Lösung über Leitung 15 eingeleitet, der dem Absorber des Verbrennungsreaktors 4 entnommen wird. Letzterem wird über Verbindung 8 Wasserstoff und über Leitung 14 Chlorgas aus einer separaten Chlorquelle zugeführt. Das Chlordioxid-Trägergasgemisch tritt über Verbindung 11 in die Absorptionsvorrichtung 3 ein. Die wässrige Chlordioxid-Lösung wird über 12 abgezogen und im Behälter 5 gesammelt. Das vom Chlordioxid befreite Restgasgemisch wird über Leitung 13 und Gebläse 6 dem Verbrennungsreaktor 4 zugeführt oder aber über Leitung 16 zumindest teilweise in den Reaktor 2 zurückgeleitet, wobei über diese Leitung auch Fremdchlor in den Reaktor eingespeist werden kann.

Ausführungsbeispiel

In einer Zellstoffanlage zur Erzeugung von 500 tato gebleichtem Zellstoff werden 8 tato Chlordioxid und 20 tato Chlor benötigt. Das Chlor wird in flüssiger Form angeliefert. Der Wirkungsgrad des Chlordioxid-Reaktors soll 92% betragen. In diesem Falle werden 13,76 tato Alkalichlorat benötigt. Bei der Herstellung des Alkalichlorats fallen 0,776 tato Wasserstoff an. Zur Erzeugung von 8 tato Chlordioxid durch Umsetzung von Alkalichlorat mit Salzsäure werden 10,88 tato HCl benötigt.

Bei 15% Chlordioxid im Trägergas würden 0,792 tato Wasserstoff benötigt. Zur Erzeugung der obengenannten 10,88 tato HCl würden 0,298 tato Wasserstoff verbraucht. Zur Verbrennung des Sauerstoffs der Verdünnungsluft werden demzufolge 0,494 tato Wasserstoff benötigt. Es stehen jedoch nur 0,478 tato $H_2$ aus der Chloratelektrolyse zur Verfügung. Ohne Berücksichtigung eines wünschenswerten Wasserstoffüberschusses bei der Erzeugung der Salzsäure müssten nur 3,24% der Verdünnungsluft umgewälzt werden, um einen sicheren Betrieb des Gesamtverfahrens zu erreichen.

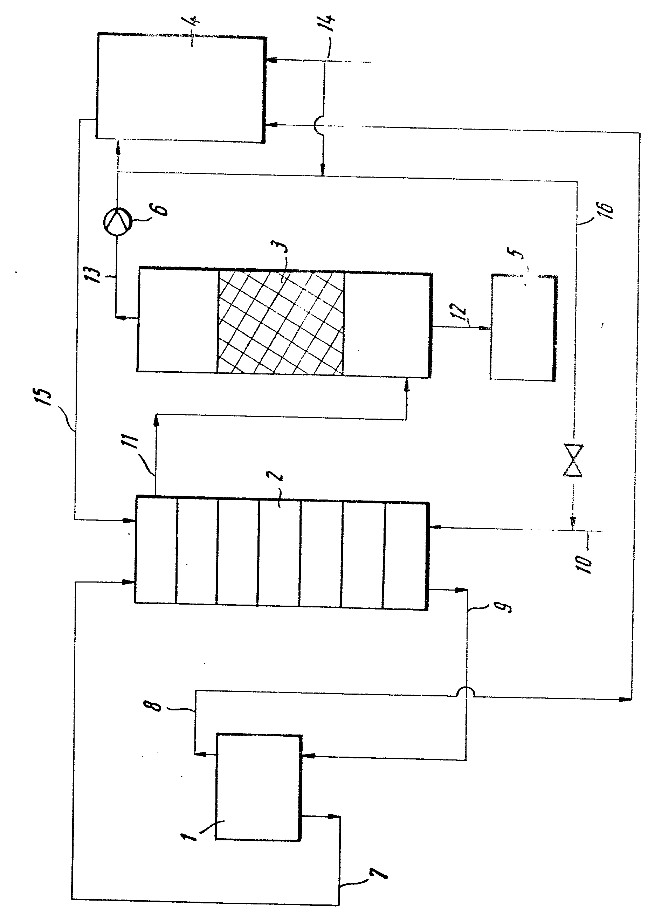

**Patentansprüche**

1. Verfahren zur kontinuierlichen Herstellung von Chlordioxid durch Umsetzen von Alkalichlorat mit Salzsäure in einem Reaktor, wobei ein Luftstrom entgegen dem Flüssigkeitsstrom geleitet wird, dadurch gekennzeichnet, dass der in den Reaktor eingeführte Luftstrom teilweise durch einen Chlorgasstrom ersetzt wird.

2. Verfahren nach Anspruch 1, dadurch gekennzeichnet, dass die eingeführte Chlorgasmenge der in Form von Chlordioxid ausgetragenen Chlormenge entspricht.

3. Verfahren nach den Ansprüchen 1 bis 2, dadurch gekennzeichnet, dass ein Fremdstrom von Chlorgas in den Chlordioxidreaktor eingeführt wird.

4. Verfahren nach den Ansprüchen 1 bis 2, dadurch gekennzeichnet, dass im Chlordioxid-Reaktor entstehendes Chlorgas in den Reaktor rückgeführt wird.

**Revendications**

1. Procédé de préparation en continu de dioxyde de chlore par réaction d'un chlorate de métal alcalin sur l'acide chlorhydrique dans un réacteur, un courant d'air étant envoyé à contre-courant du courant de liquide, caractérisé en ce qu'il consiste à remplacer partiellement le courant d'air introduit dans le réacteur par un courant de chlore gazeux.

2. Procédé suivant la revendication 1, caractérisé en ce que la quantité de chlore gazeux introduite correspond à la quantité de chlore soutirée sous forme de dioxyde de chlore.

3. Procédé suivant la revendication 1 ou 2, caractérisé en ce qu'il consiste à introduire un courant étranger de chlore gazeux dans un réacteur de dioxyde de chlore.

4. Procédé suivant la revendication 1 ou 2, caractérisé en ce qu'il consiste à recycler au réacteur de dioxyde de chlore le chlore gazeux se produisant dans ce réacteur.

**Claims**

1. A continuous process of producing chlorine dioxide in which alkali metal chlorate is reacted with hydrochloric acid in a reactor and an air stream is conducted in a countercurrent to the liquid stream, characterized in that a part of the air stream introduced into the reactor is replaced by a chlorine gas stream.

2. A process according to claim 1, characterized in that chlorine gas is introduced at the rate at which chlorine is discharged from the reactor in the form of chlorine dioxide.

3. A process according to claims 1 and 2, characterized in that a stream of extraneous chlorine gas is introduced into the chlorine dioxide-producing reactor.

4. A process according to claims 1 and 2, characterized in that chlorine gas produced in the chlorine dioxide-producing reactor is recycled into the reactor.

1/1